# FASCICULE DE BREVET EUROPEEN

(11) **EP 3 463 633 B1**
(45) Date de publication et mention de la délivrance du brevet: **18.10.2023**
(21) Numéro de dépôt: 17729527.6
(22) Date de dépôt: 22.05.2017
(51) Int. Cl.: B01F 23/53, B01F 27/091, B01F 27/1145, B01F 27/192, B01F 35/33, B01F 35/75

(54) **PALE DE MELANGE POUR APPAREIL DE PREPARATION D'ALIMENT POUR ANIMAUX ET PROCÉDÉ DE PRÉPARATION D'ALIMENT POUR ANIMAUX**
RÜHRQUIRL FÜR GERÄT ZUR ZUBEREITUNG VON TIERFUTTER UND VERFAHREN ZUR ZUBEREITUNG VON TIERFUTTER
MIXING PADDLE FOR APPLIANCE FOR PREPARING ANIMAL FEED, AND METHOD FOR PREPARING ANIMAL FEED

(30) Priorité: 23.05.2016 FR 1654599
(43) Date de publication de la demande: 10.04.2019
(73) Titulaire: SEB S.A., 69130 Ecully (FR)
(72) Inventeur: MORIN, Gilles, 69290 Polloionnay (FR)
(74) Mandataire: SEB Développement
(86) Numéro de dépôt international: PCT/FR2017/051258
(87) Numéro de publication internationale: WO 2017/203149

(56) Documents cités:
- EP-A1- 2 781 254
- EP-A1- 2 990 373
- EP-A2- 0 809 934
- WO-A1-2014/170450
- GB-A- 2 313 997
- US-A1- 2006 268 659

## Description

La présente invention concerne de manière générale une pale de mélange agencée pour être reçue dans une enceinte de mélange d'un appareil de préparation d'aliment pour animaux comprenant une portion d'un aliment déshydraté avec un liquide. L'invention concerne aussi un procédé de mélange d'aliment pour animaux et un appareil de préparation d'aliment pour animaux comprenant une portion d'un aliment déshydraté avec un liquide.

Il est connu dans l'art antérieur des dispositifs de préparation d'aliment pour animaux domestiques, tels que celui décrit par exemple dans le document US8511519B2. En contrepartie, ce système présente notamment l'inconvénient de ne proposer que des aliments sous forme solide, ce qui peut ne pas convenir à certains animaux.

Il est connu des documents GB 2313997A, EP 0809934 A2, EP 2990373 A1 et EP 2781254 A1 de disposer d'une pale de mélange agencée pour être reçue dans une enceinte de mélange d'un appareil de préparation d'aliment pour animaux afin d'y mélanger des ingrédients tels qu'une portion d'un aliment déshydraté avec un liquide.

Un but de la présente invention est de répondre aux inconvénients de l'art antérieur mentionnés ci-dessus et en particulier, tout d'abord, de proposer une pale de mélange pour être reçue dans une enceinte de mélange d'un appareil de préparation d'aliment pour animaux, qui permet de mélanger un aliment déshydraté avec un liquide, sans pour autant complexifier l'appareil de préparation.

Un première aspect de l'invention concerne un appareil de préparation d'aliment pour animaux selon la revendication 1.

Une pale de mélange est agencée dans l'enceinte de mélange dudit appareil de préparation d'aliment pour animaux afin d'y mélanger des ingrédients comprenant une portion d'un aliment déshydraté avec un liquide, la pâle de mélange étant agencée pour tourner autour d'un axe de rotation horizontal, et comprenant au moins un bras excentré par rapport à l'axe de rotation, où le dit au moins un bras excentré comprend :
- une première portion inclinée par rapport à un plan contenant l'axe de rotation, afin de provoquer un mouvement des ingrédients contenus dans l'enceinte de mélange le long d'une première direction axiale lorsque la pale de mélange tourne dans un premier sens de rotation,
- une deuxième portion agencée en amont de la première portion par rapport à la première direction axiale, présentant une section transversale orientée radialement par rapport à l'axe de rotation pour, lorsque la pale de mélange tourne dans un deuxième sens de rotation, provoquer un mouvement radial vers l'extérieur de l'enceinte de mélange des ingrédients contenus dans l'enceinte de mélange et qui sont alors ramenés vers la deuxième portion par la première portion. La pale de mélange selon la présente mise en oeuvre permet d'assurer deux fonctions différentes, en plus de pouvoir mélanger les ingrédients : dans un premier sens de rotation, la pale de mélange permet, avec sa première portion, de pousser ou déplacer les ingrédients dans une première direction axiale (définie par l'axe de rotation de la pale de mélange), et dans un deuxième sens de rotation, la pale de mélange permet, avec sa deuxième portion, d'expulser vers l'extérieur les ingrédients selon une direction radiale, alors que la première portion provoque un mouvement dans une direction opposée à la première direction, puisque la pale de mélange tourne dans un sens opposé au premier sens de rotation. Dans le deuxième sens de rotation, la pale de mélange ramène avec la première portion les ingrédients vers la deuxième portion, qui les force à passer vers l'extérieur de l'enceinte de mélange.

En d'autres termes, si l'enceinte de mélange présente une forme allongée avec une première extrémité fermée et une deuxième extrémité avec un orifice radial, alors la pale de mélange en tournant dans le premier sens de rotation va guider ou pousser vers la première extrémité avec la première portion les ingrédients introduits par l'orifice à la deuxième extrémité. Ensuite, en imposant à la pale de mélange un deuxième sens de rotation opposé au premier sens de rotation, la première portion va provoquer un mouvement des aliments de la première extrémité vers la deuxième extrémité, et la deuxième portion va alors les pousser radialement vers l'extérieur au travers de l'orifice de l'enceinte de mélange.

Avantageusement, la première portion de la pale de mélange est du côté de la première extrémité de l'enceinte de mélange, et la deuxième portion est du côté de la deuxième extrémité de l'enceinte de mélange.

Avantageusement, la deuxième portion et/ou la première portion est agencée pour racler l'enceinte de mélange. La pale de mélange selon cette mise en oeuvre évite de laisser des ingrédients sur la paroi de l'enceinte de mélange.

Avantageusement, la deuxième portion comprend une partie souple. Une telle partie souple évite les coincements ou blocages si des grains ou parties solides sont présents dans l'enceinte de mélange.

Avantageusement, la partie souple est en silicone. Une telle matière est bien adaptée aux contraintes alimentaires.

Avantageusement, la première portion présente une section transversale allongée dont la longueur est normale à la direction de déplacement de la première portion. Cette mise en oeuvre permet de mélanger efficacement les ingrédients.

Avantageusement, la deuxième portion est parallèle à un plan contenant l'axe de rotation.

Avantageusement, la pale de mélange comprend deux bras excentrés.

Avantageusement, la pale de mélange comprend au moins une patte radiale joignant les deux bras excentrés. Cette patte radiale limite les déformations de la pale de mélange, et réduit le risque de coincement.

Avantageusement, la pale de mélange comprend deux ancrages sur l'enceinte de mélange et une patte longitudinale joignant les deux ancrages. Cette patte axiale limite les déformations de la pale de mélange, et réduit le risque de coincement.

Avantageusement, la première et la deuxième portions sont agencées entre les deux ancrages.

Avantageusement, un des ancrages est agencé pour s'accoupler avec un entraîneur relié à un moteur de l'appareil de préparation.

Avantageusement, la première portion présente une forme hélicoïdale.

Avantageusement, ledit au moins un bras excentré présente une section transversale dont la longueur est inférieure ou égale à 12mm, et préférentiellement inférieure ou égale à 10mm. Cette mise en oeuvre limite les encrassements sur la pale de mélange.

Un deuxième aspect de l'invention concerne un procédé de préparation d'aliment pour animaux selon la revendication 13.

Avantageusement, l'introduction des ingrédients se fait par un orifice de l'enceinte de mélange.

Avantageusement, le déplacement des ingrédients le long de la première direction éloigne les ingrédients de l'orifice par lequel les ingrédients sont introduits. La pale de mélange tournant alors autour de l'axe de rotation selon un premier sens de rotation.

Avantageusement, l'introduction des aliments et le déplacement des ingrédients sont effectués au moins en partie simultanément. Cela permet d'éviter de bloquer l'orifice, et de remplir uniformément l'enceinte de mélange.

Avantageusement, le déplacement des ingrédients le long de la deuxième direction rapproche les ingrédients de l'orifice par lequel les ingrédients ont été introduits. La pale de mélange tournant alors autour de l'axe de rotation selon un deuxième sens de rotation.

Avantageusement, le procédé comprend une étape de déplacement de l'enceinte de mélange entre l'étape d'introduction des ingrédients et l'étape d'expulsion des aliments, pour faire passer l'orifice d'une position haute à une position basse par rapport à l'enceinte de mélange.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une pale de mélange agencée pour être reçue dans une enceinte de mélange d'un appareil de préparation selon la présente invention, vue de côté ;
- la figure 2 représente la pale de mélange de la figure 1, vue selon la direction II de la figure 1 ;
- la figure 3 représente la pale de mélange de la figure 1, vue selon la direction III de la figure 1 ;
- la figure 4 représente une coupe de la pale de mélange de la figure 1, selon l'axe IV-IV de la figure 1 ;
- la figure 5a représente la pale de mélange de la figure 1 placée dans l'enceinte de mélange de l'appareil de préparation selon la présente invention ;
- la figure 5b représente un pot faisant partie de l'enceinte de mélange de la figure 5a ;
- la figure 6 représente une vue en perspective d'un appareil de préparation d'aliment pour animaux selon la présente invention accueillant l'enceinte de mélange de la figure 5a ;
- la figure 7 représente une coupe de l'appareil de préparation d'aliment pour animaux de la figure 6 ;
- la figure 8 représente une vue en perspective de dessous d'un logement de l'appareil de préparation de la figure 6 ;
- la figure 9 représente une vue en perspective d'une zone de distribution de l'appareil de préparation de la figure 6 ;
- la figure 10 représente une vue de l'arrière de l'appareil de préparation de la figure 6 ;
- la figure 11 représente une vue éclatée de l'appareil de préparation de la figure 6 ;
- la figure 12 représente une vue détaillant une cartouche amovible de l'appareil de préparation de la figure 6.

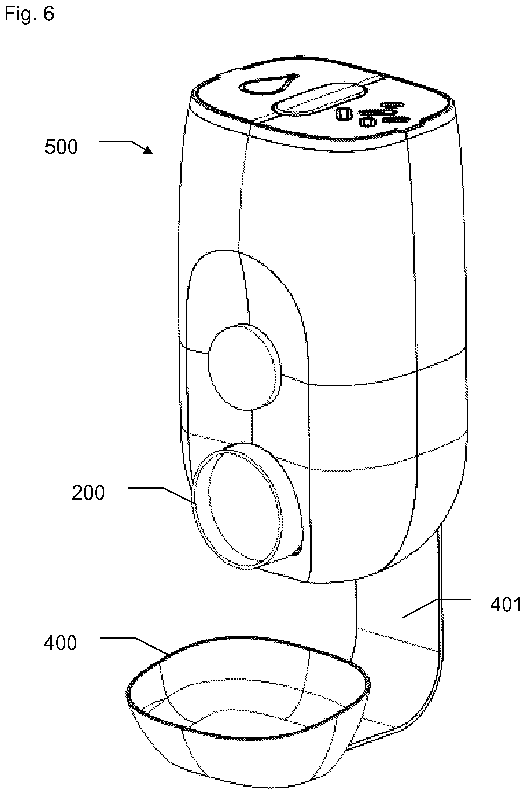

Les figures 6, 10, 11, et 12 représentent des vues générales d'un appareil de préparation 500 selon la présente invention, qui comporte un corps principal soutenu par une équerre 401, qui soutient également un récipient de consommation 400 (une gamelle par exemple).

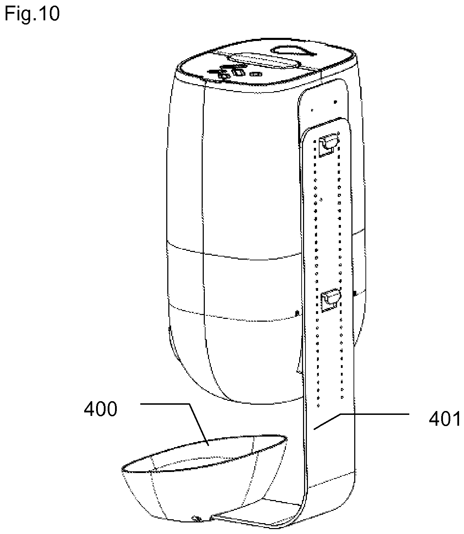

La figure 10 montre que le corps principal peut être positionné selon différentes altitudes par rapport à l'équerre 401, de sorte à pouvoir ajuster une hauteur entre le corps principal et le récipient de consommation 400, en fonction de la taille de l'animal à nourrir. A cet effet, une pluralité de trous sont prévus dans l'équerre 401, afin de pouvoir la visser à l'altitude adéquate dans des trous taraudés du corps principal. L'équerre 401 est quant à elle fixée à un mur par exemple pour maintenir en place l'appareil de préparation 500 et le récipient de consommation 400.

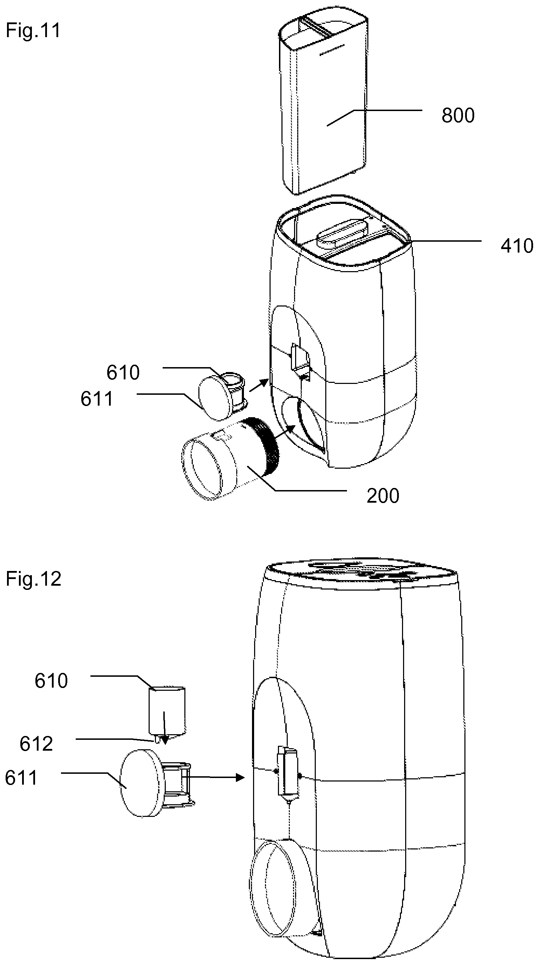

La figure 11 montre que l'appareil de préparation 500 peut recevoir de manière amovible plusieurs éléments dont un réservoir de liquide 800, une cartouche amovible 610 et une enceinte de mélange 200 dans laquelle sont mélangés au moins un liquide (de l'eau par exemple) et un aliment déshydraté pour former une ration alimentaire sous forme de pâtée qui sera ensuite distribuée dans le récipient de consommation 400. Un bac 410 est également prévu dans le corps de l'appareil de préparation 500, pour servir de moyens de stockage pour l'aliment déshydraté.

L'appareil de préparation 500 peut également recevoir de manière amovible la cartouche amovible 610 et son support 611, dont le montage extrêmement simple est montré figure 12. En effet, la cartouche amovible 610, qui contient un complément alimentaire à inclure si besoin dans les ingrédients à mélanger, peut être montée dans son support 611, et le sous-ensemble est ensuite encliqueté ou inséré dans le corps principal de l'appareil de préparation 500, au dessus de l'enceinte de mélange, pour pouvoir aisément inclure une quantité définie de complément alimentaire à la ration alimentaire pour l'animal, comme cela sera expliqué ultérieurement.

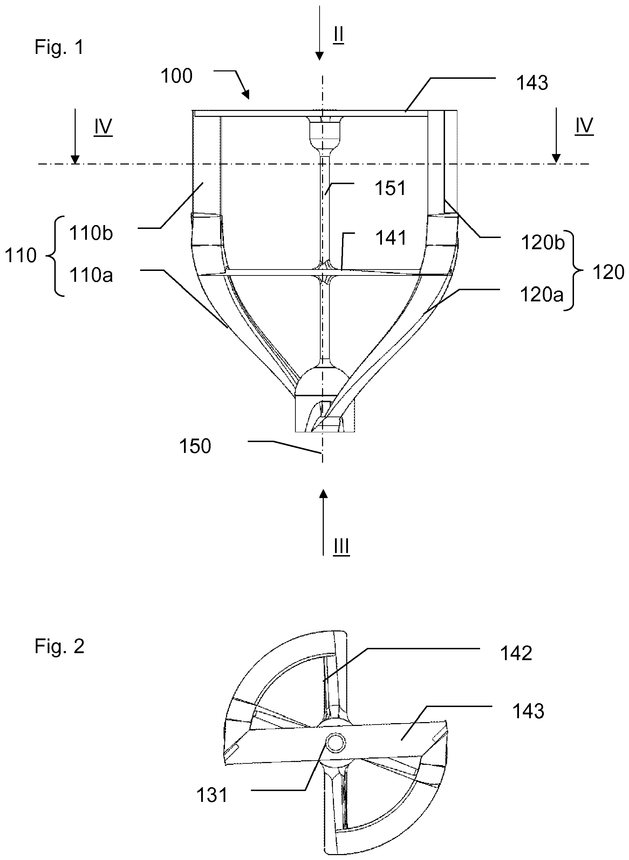

La figure 1 représente une pale de mélange 100 agencée pour être reçue dans l'enceinte de mélange 200 de l'appareil de préparation 500 selon la présente invention, qui comprend un premier bras excentré 110 et un deuxième bras excentré 120, tous deux excentrés par rapport à un axe de rotation 150, autour duquel la pale de mélange tourne lors de son utilisation dans l'appareil de préparation 500 d'aliment pour animaux.

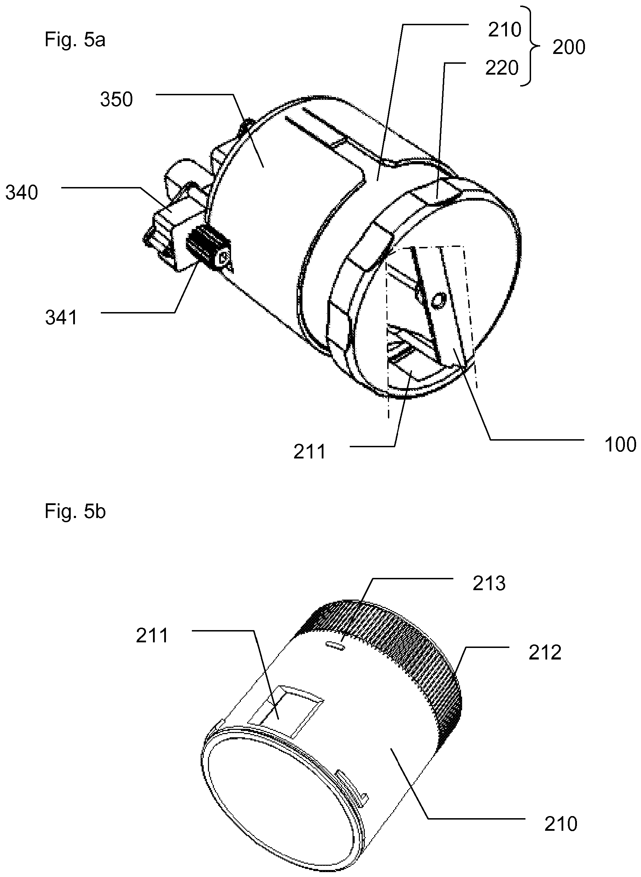

En effet, la pale de mélange 100 est agencée pour être reçue dans l'enceinte de mélange 200 (visible figures 5a, 6, 7 et 11) de l'appareil de préparation 500 (visible figure 6) d'aliment pour animaux, afin d'y mélanger des ingrédients tels qu'une portion d'un aliment déshydraté avec un liquide. A cet effet, il est prévu d'entraîner la pale de mélange 100 en rotation autour de l'axe de rotation 150, afin de mélanger tout d'abord l'aliment déshydraté avec un liquide tel que de l'eau, puis de malaxer ce mélange pour obtenir une pâte homogène, et la distribuer ensuite dans le récipient de consommation 400 (visible figure 6) accessible à l'animal pour qu'il puisse consommer cette pâtée tout juste préparée.

Pour revenir à la figure 1, chaque bras excentré 110 et 120 comprend une première portion 110a et 120a respectivement, inclinée par rapport à un plan contenant l'axe de rotation 150, afin de provoquer un mouvement des ingrédients contenus dans l'enceinte de mélange le long d'une première direction axiale (la direction II de la figure 1) lorsque la pale de mélange tourne dans un premier sens de rotation. Avantageusement, les premières portions 110a et 120a sont de forme hélicoïdale pour former une portion de vis d'Archimède. Ainsi, lorsque la pale tourne dans un deuxième sens de rotation opposé au premier sens de rotation, les premières portions 110a et 120a provoquent un mouvement des ingrédients contenus dans l'enceinte de mélange le long d'une deuxième direction axiale, la direction III de la figure 1.

De plus, chaque bras excentré 110 et 120 comprend une deuxième portion 110b et 120b respectivement, agencée en amont de la première portion 110a et 120a par rapport à la première direction axiale II, présentant une section transversale orientée radialement par rapport à l'axe de rotation 150 pour, lorsque la pale de mélange 100 tourne dans un deuxième sens de rotation, provoquer un mouvement radial vers l'extérieur de l'enceinte de mélange 200 des ingrédients contenus dans l'enceinte de mélange 200 et qui sont alors ramenés vers la deuxième portion 110b et 120b par la première portion 110a et 120a.

En effet, l'invention propose de faire tourner la pale de mélange 100 selon deux sens de rotation contraires, en fonction du résultat à atteindre, comme cela est expliqué ci-dessous.

Comme montré figure 5a, l'enceinte de mélange 200 comprend un pot 210 fermé par un couvercle 220, la pale de mélange 100 étant agencée dans le pot 210 fermé par le couvercle 220. L'enceinte de mélange 200 comprend également un orifice 211 montré à travers le couvercle 220 par une coupe partielle. Comme on le voit figure 5a et 5b, l'orifice 211 est formé dans le pot, mais on peut envisager d'implanter l'orifice 211 dans le couvercle.

L'appareil de préparation 500 comprend un motoréducteur 340 avec un pignon 341 qui peut faire pivoter l'enceinte de mélange 200 lorsqu'elle est placée dans un logement 350 de l'appareil de préparation 500. Dans la suite de l'exposé, on considérera que le fond du pot 210 forme une première extrémité de l'enceinte de mélange 200, et le couvercle 220 est alors placé à une deuxième extrémité de l'enceinte de mélange 200.

Dans une première position, l'enceinte de mélange 200 est placée dans le logement 350 avec l'orifice 211 en haut de l'enceinte de mélange 200, de telle sorte que les ingrédients (l'aliment déshydraté, le liquide et un éventuel complément alimentaire) tombent par gravité dans l'enceinte de mélange 200, du côté de la deuxième extrémité donc.

Lors d'une première phase de préparation, il est donc prévu de faire tourner la pale de mélange 100 dans un premier sens de rotation pour que les ingrédients soient poussés ou déplacés par les premières portions 110a et 120a vers la première extrémité de l'enceinte de mélange 200 (selon la direction II de la figure 1 donc) pour éviter une accumulation des ingrédients au niveau de l'orifice 211.

Cette première phase de préparation peut durer plusieurs minutes, le temps de repousser les ingrédients vers le fond du pot 210 et les y mélanger et malaxer pour obtenir une pâte ou pâtée homogène et prête à consommer par l'animal. On peut également prévoir de stopper temporairement la rotation pour permettre au liquide de bien pénétrer l'aliment déshydraté. Pour mélanger efficacement les ingrédients, les premières portions 110a et 120a ont une section transversale allongée qui est sensiblement perpendiculaire à leur direction de déplacement, mais la longueur de cette section transversale est limitée à par exemple 12mm et plus particulièrement à 10mm, pour éviter tout encrassement autour de la pale de mélange. De plus, cette section transversale peut présenter une surface minimale de 20mm², ce qui lui confère une résistance adéquate.

On peut prévoir de fabriquer la pale de mélange 100 en acrylonitrile butadiène styrène ou ABS, en poly(oxyméthylène) (ou polyformaldéhyde), de sigle POM, ou encore en polyamide de sigle PA. On peut bien entendu prévoir d'ajouter des fibres de renfort dans la matière.

Une deuxième phase de préparation peut alors débuter, pour distribuer la pâtée dans le récipient de consommation 400. A cet effet, le motoréducteur 340, par l'intermédiaire du pignon 341 qui s'engage avec une portion dentée 212 du pot 210 (visible figure 5b), fait pivoter l'enceinte de mélange 200 dans le logement 350, pour amener l'orifice 211 en bas de l'enceinte de mélange.

A ce moment, en faisant tourner la pale de mélange 100 dans un deuxième sens de rotation (opposé au premier sens de rotation de la première phase de préparation), alors les ingrédients sont ramenés par les premières portions 110a et 120a vers la deuxième extrémité de l'enceinte de mélange, c'est-à-dire vers les deuxièmes portions 110b et 120b, situées en regard de l'orifice 211.

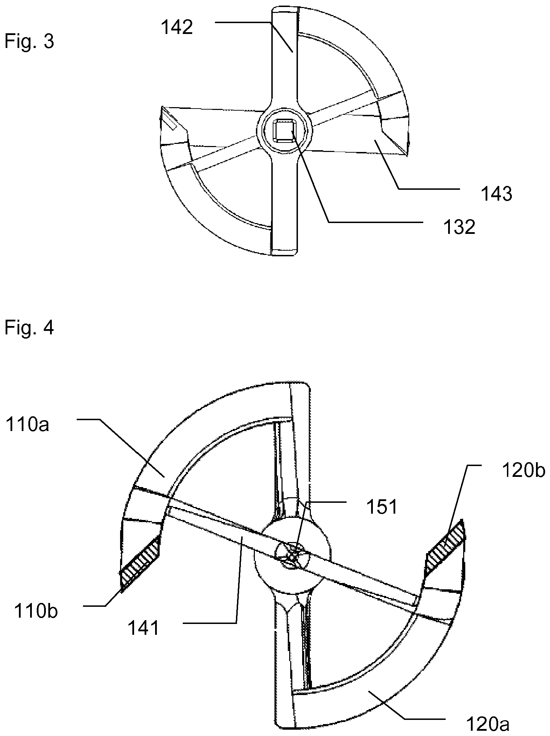

La section orientée des deuxièmes portions 110b et 120b, comme on peut le voir figure 4, a alors pour effet de repousser les ingrédients vers l'extérieur de l'enceinte de mélange, et de faire donc passer la pâtée par l'orifice 211, pour tomber par gravité dans le récipient de consommation 400 situé juste en dessous. La longueur des deuxièmes portions 110b et 120b est calculée pour qu'au moins une partie de ces deuxièmes portions 110b et 120b soient en regard de l'orifice 211.

Lorsqu'elle tourne dans le premier sens de rotation, la pale de mélange 100 a donc pour effet de déplacer les ingrédients vers la première extrémité de l'enceinte de mélange 200 et les y mélanger, et lorsqu'elle tourne dans le deuxième sens de rotation, la pale de mélange 100 a donc pour effet de déplacer les ingrédients vers la deuxième extrémité de l'enceinte de mélange 200 et les pousser au travers de l'orifice 211.

Comme visible figure 5a, les deuxièmes portions 110b et 120b sont ajustées au diamètre du pot 210, et afin de limiter les risques de coincement si des grains ou particules solides se trouvent dans la pâtée entre la pale de mélange 100 et le pot 210, il est prévu que les deuxièmes portions 110b et 120b soient au moins en partie souples, pour pouvoir se déformer, et "passer par-dessus ces grains ou particules solides". On peut donc prévoir une partie en silicone sur les deuxièmes portions 110b et 120b.

Comme représenté sur les figures 1, 2 et 3, la pale de mélange 100 comprend des pattes de liaison entre les bras excentrés 110 et 120 afin de procurer une bonne rigidité à la pale de mélange 100. En particulier, deux bras radiaux 142 et 143 sont prévus aux extrémités de la pale de mélange 100, pour joindre les bras excentrés 110 et 120 et une partie centrale de la pale de mélange 100.

De plus, une patte radiale 141 est prévue au centre de la pale de mélange 100, et une patte longitudinale 151 est prévue au niveau de l'axe de rotation 150 pour encore rigidifier l'ensemble et éviter les déformations par torsion ou flexion, qui pourraient conduire à un blocage de la pale de mélange 100 dans l'enceinte de mélange 200.

La figure 2 montre de plus un centrage 131 (un alésage) qui forme un ancrage pour assurer une liaison pivot de qualité avec l'enceinte de mélange 200 où un pion correspondant est agencé dans le couvercle 220.

La figure 3 montre enfin un carré d'entraînement 132 qui est agencé pour former un autre ancrage et s'engager avec un entraîneur de l'appareil de préparation 500, situé au fond du logement 350. On peut prévoir toute autre forme asymétrique à la place du carré d'entraînement 132 pour assurer l'entraînement de la pale de mélange 100, il suffit simplement une forme avec un blocage en rotation.

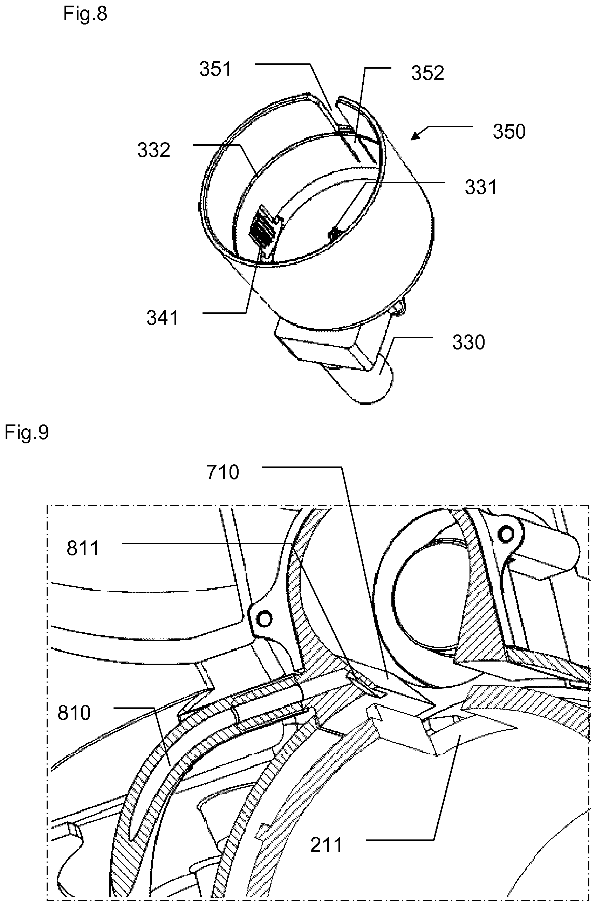

La figure 8 représente une vue en perspective de dessous du logement 350 de l'appareil de préparation 500. On y retrouve le motoréducteur 340 et son pignon 341, mais également un motoréducteur 330 agencé pour entraîner en rotation la pale de mélange 100 via un entraîneur 331 visible au fond du logement 350.

On voit aussi une fente 351 ménagée dans la paroi cylindrique du logement 350, pour laisser passer un ergot 213 (visible figure 5b) du pot 210, afin de garantir que l'orifice 211 se trouve en partie supérieure de l'enceinte de mélange 200, dès sa mise en place dans ou sur l'appareil de préparation 500.

La fente 351 se termine sur une languette ou patte flexible 352 qui comprend une portion d'une gorge 332 qui est agencée sur 360° sur la face interne du logement 350.

Lors de l'insertion de l'enceinte de mélange sur l'appareil de préparation 500, l'ergot 213 est donc guidé par la fente 351, et soulève la patte flexible 352, pour arriver dans la gorge 332. L'enceinte de mélange est donc solidaire du logement 350, l'orifice 211 étant en partie supérieure. La première phase de préparation peut commencer avec alimentation des ingrédients par gravité dans l'enceinte de mélange 200 et mélange avec la pale de mélange 100 qui tourne dans le premier sens de rotation.

Ensuite, la pale de mélange est stoppée, et l'enceinte de mélange 200 est pivotée par le motoréducteur 340 pour faire passer l'orifice 211 en partie inférieure de l'enceinte de mélange 200. Ce mouvement est permis et guidé par la gorge 332 qui accueille l'ergot 213.

L'enceinte de mélange 200 est stoppée en position de distribution, avec l'orifice 211 en position basse, la pale de mélange peut alors être mise en rotation selon le deuxième sens de rotation, pour expulser les ingrédients sous forme de pâtée par l'orifice 211. Ce dernier présente des bords biseautés pour éviter que la pâtée ne reste accrochée sur les bords de l'orifice 211.

Enfin, une fois l'enceinte de mélange 200 vide, la pale de mélange 100 peut à nouveau être stoppée, et l'enceinte de mélange 200 peut à nouveau être pivotée pour repasser en position de mélange. Une nouvelle préparation peut être lancée, ou l'enceinte de mélange 200 peut être retirée par l'utilisateur, car en saisissant la portion externe de l'enceinte de mélange 200 au capot (le couvercle 220 par exemple), la patte flexible peut libérer l'ergot 213.

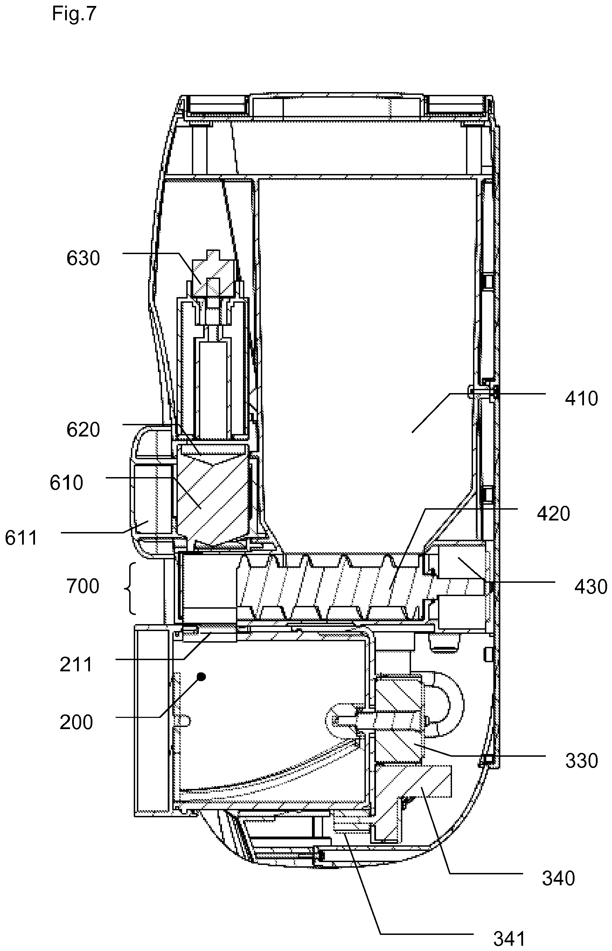

De retour à la figure 7, on peut voir le bac 410 qui forme des moyens de stockage de l'aliment déshydraté, avec une vis 420, qui peut être une vis hélicoïdale, accouplée à un moteur électrique 430, qui peut être un motoréducteur. La vis 420 est donc agencée pour prélever de l'aliment déshydraté dans le bac 410, et le transporter jusqu'à une zone de distribution 700, au dessus de l'orifice 211 (car l'enceinte de mélange 200 est dans la première position).

On voit aussi figure 7 la cartouche amovible 610 positionnée au dessus de la zone de distribution 700, et qui contient un complément alimentaire tel que des vitamines, des oligoéléments, des produits de santé (un produit vermifuge par exemple), afin de personnaliser et adapter la ration alimentaire à préparer, en fonction des besoins de l'animal. La cartouche amovible 610 contient un complément alimentaire idéalement sous forme liquide ou pâteuse, et l'appareil de préparation 500 comprend un moteur 630 agencé pour déplacer un piston 620, afin de forcer une quantité prédéterminée de complément alimentaire à tomber dans l'enceinte de mélange 200.

La cartouche amovible 610 est montée sur le support 611 qui permet de la recevoir et l'indexer via un pion d'indexage 612 (visible figure 12), pour la positionner correctement dans l'appareil de préparation 500.

Comme on le voit figure 11, l'appareil de préparation 500 comprend le réservoir de liquide 800, agencé pour former des moyens de stockage de liquide, et stocker de l'eau par exemple. Le réservoir de liquide 800 est monté amovible pour pouvoir être aisément rempli, lavé ou séché.

Le réservoir de liquide 800 est relié à un canal d'approvisionnement 810 dont on voit une extrémité aval 811 sur la figure 9. On voit sur cette figure en coupe une partie de l'orifice 211 et des parois 710 qui définissent la zone de distribution 700. L'extrémité aval 811 du canal d'approvisionnement 810 est donc positionnée au dessus de l'orifice 211, mais elle est aussi décalée par rapport aux parois 710, pour éviter tout contact ou ruissellement de l'eau sur les parois 710 de la zone de distribution, mais aussi avec les parois de l'orifice 211, ce qui évitera à l'aliment déshydraté de coller et salir ces parois. L'extrémité aval 811 est donc en regard de l'orifice 211, et elle est décalée par rapport à l'alimentation en aliment déshydraté et en complément alimentaire pour que ces trois ingrédients puissent être introduits en même temps dans l'enceinte de mélange 200 sans contact entre eux, pour éviter les salissures de la zone de distribution 700, qui n'est pas démontable.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de préparation (500) d'aliment pour animaux comprenant une pale de mélange (100) et une enceinte de mélange (200) comprenant un orifice (211), la pale de mélange (100) étant agencée pour être reçue dans l'enceinte de mélange (200) de l'appareil de préparation (500) d'aliment pour animaux afin d'y mélanger des ingrédients comprenant une portion d'un aliment déshydraté avec un liquide,
la pale de mélange (100) étant agencée pour tourner autour d'un axe de rotation (150) horizontal, et comprenant au moins un bras excentré (110, 120) par rapport à l'axe de rotation (150), ledit au moins un bras excentré (110, 120) comprenant:
- une première portion (110a, 120a) inclinée par rapport à un plan contenant l'axe de rotation (150), afin de provoquer un mouvement des ingrédients contenus dans l'enceinte de mélange (200) le long d'une première direction axiale lorsque la pale de mélange (100) tourne dans un premier sens de rotation,
- une deuxième portion (110b, 120b) agencée en amont de la première portion (110a, 120a) par rapport à la première direction axiale, présentant une section transversale orientée radialement par rapport à l'axe de rotation (150) pour, lorsque la pale de mélange (100) tourne dans un deuxième sens de rotation, provoquer un mouvement radial vers l'extérieur de l'enceinte de mélange (200) des ingrédients contenus dans l'enceinte de mélange (200) et qui sont alors ramenés vers la deuxième portion (110b, 120b) par la première portion (110a, 120a),
**caractérisé en ce que**
- l'enceinte de mélange (200) comprend un pot (210) fermé par un couvercle (220), ledit orifice (211) étant formé dans le pot (210) ou implanté dans le couvercle (220), la pale de mélange (100) étant agencée dans le pot (210) fermé par le couvercle (220), un fond du pot (210) formant une première extrémité de l'enceinte de mélange (200), le couvercle (220) étant placé à une deuxième extrémité de l'enceinte de mélange (200),
et **en ce que**
- l'enceinte de mélange (200) est conçue pour, dans une première position, être placée dans un logement (350) de l'appareil de préparation (500) avec l'orifice (211) en haut de l'enceinte de mélange (200), de telle sorte que les ingrédients tombent par gravité dans l'enceinte de mélange (200) du côté de la deuxième extrémité et que, lorsque la pale de mélange (100) tourne dans le premier sens de rotation, les ingrédients sont poussés ou déplacés par la première portion (110a, 120a) vers la première extrémité de l'enceinte de mélange (200),
- l'appareil (500) comprenant un motoréducteur (340) et un pignon (341) qui s'engage avec une portion dentée du pot (210) pour faire pivoter l'enceinte de mélange (200) dans le logement (350) pour amener l'orifice (211) en bas de l'enceinte de mélange (200), de sorte qu'en faisant tourner la pale de mélange (100) dans le deuxième sens de rotation, les ingrédients sont ramenés par la première portion (110a; 120a) vers la deuxième extrémité de l'enceinte de mélange, c'est-à-dire vers la deuxième portion (110b ; 120b), située en regard de l'orifice (211).

2. Appareil de préparation (500) selon la revendication précédente, dans laquelle la deuxième portion (110b, 120b) de la pale de mélange (100) comprend une partie souple.

3. Appareil de préparation (500) selon la revendication précédente, dans laquelle la partie souple de la pale de mélange (100) est en silicone.

4. Appareil de préparation (500) selon l'une des revendications précédentes, dans laquelle la première portion (110a, 120a) de la pale de mélange (100) présente une section transversale allongée dont la longueur est normale à la direction de déplacement de la première portion (110a, 120a).

5. Appareil de préparation (500) selon l'une des revendications précédentes, dans laquelle la deuxième portion (110b, 120b) de la pale de mélange (100) est parallèle à un plan contenant l'axe de rotation (150).

6. Appareil de préparation (500) selon l'une des revendications précédentes, dans lequel la pale de mélange (100) comprend deux bras excentrés (110, 120).

7. Appareil de préparation (500) selon la revendication précédente, dans lequel la pale de mélange (100) comprend au moins une patte radiale (141) joignant les deux bras excentrés (110, 120).

8. Appareil de préparation (500) selon l'une des revendications précédentes, dans lequel la pale de mélange (100) comprend deux ancrages sur l'enceinte de mélange (200) et une patte longitudinale (151) joignant les deux ancrages.

9. Appareil de préparation (500) selon la revendication précédente, dans lequel la première et la deuxième portions (110b, 120b) de la pale de mélange (100) sont agencées entre les deux ancrages.

10. Appareil de préparation (500) selon l'une des revendications 8 ou 9, dans lequel un des ancrages de la pale de mélange (100) est agencé pour s'accoupler avec un entraîneur relié à un moteur de l'appareil de préparation (500).

11. Appareil de préparation (500) selon l'une des revendications précédentes, dans lequel la première portion (110a, 120a) de la pale de mélange (100) présente une forme hélicoïdale.

12. Appareil de préparation (500) selon l'une des revendications précédentes, dans lequel ledit au moins un bras excentré (110, 120) de la pale de mélange (100) présente une section transversale dont la longueur est inférieure ou égale à 12mm, et préférentiellement inférieure ou égale à 10mm.

13. Procédé de préparation d'aliment pour animaux à partir d'un appareil de préparation (500) selon l'une des revendications 1 à 12 comprenant les étapes consistant à :
- introduire dans une enceinte de mélange (200) des ingrédients comprenant une portion d'un aliment déshydraté et un liquide ;
- déplacer les ingrédients contenus dans l'enceinte de mélange (200) le long d'une première direction axiale et les mélanger avec une pale de mélange (100) tournant autour d'un axe de rotation (150) ;
- déplacer les ingrédients contenus dans l'enceinte de mélange (200) le long d'une deuxième direction axiale opposée à la première direction axiale avec la pale de mélange (100) ;
- expulser les ingrédients contenus dans l'enceinte de mélange (200) selon une direction radiale, avec la pale de mélange (100).

## Patentansprüche

1. Einrichtung (500) zur Zubereitung von Tierfutter, die einen Rührquirl (100) und eine Rührkammer (200) umfasst, die eine Öffnung (211) umfasst, wobei der Rührquirl (100) so angeordnet ist, dass er in der Rührkammer (200) der Einrichtung (500) zur Zubereitung von Tierfutter aufgenommen werden kann, um darin Zutaten, die eine Portion eines Trockenfutters umfassen, mit einer Flüssigkeit zu verrühren,
wobei der Rührquirl (100) so angeordnet ist, dass er sich um eine horizontale Drehachse (150) dreht, und mindestens einen in Bezug auf die Drehachse (150) exzentrischen Arm (110, 120) umfasst, wobei der mindestens eine exzentrische Arm (110, 120) umfasst:
- einen ersten Abschnitt (110a, 120a), der in Bezug auf eine die Drehachse (150) enthaltende Ebene geneigt ist, um eine Bewegung der in der Rührkammer (200) enthaltenen Zutaten entlang einer ersten axialen Richtung zu bewirken, wenn sich der Rührquirl (100) in einer ersten Drehrichtung dreht,
- einen in Bezug auf die erste axiale Richtung stromaufwärts des ersten Abschnitts (110a, 120a) angeordneten zweiten Abschnitt (110b, 120b), der einen in Bezug auf die Drehachse (150) radial ausgerichteten Querschnitt aufweist, um, wenn sich der Rührquirl (100) in einer zweiten Drehrichtung dreht, eine radiale Bewegung in Richtung der Außenseite der Rührkammer (200) der in der Rührkammer (200) enthaltenen Zutaten zu bewirken, die dann vom ersten Abschnitt (110a, 120a) in Richtung des zweiten Abschnitts (110b, 120b) transportiert werden,
**dadurch gekennzeichnet, dass**
- die Rührkammer (200) einen Topf (210) umfasst, der von einem Deckel (220) verschlossen wird, wobei die Öffnung (211) in dem Topf (210) gebildet oder in den Deckel (220) eingelassen ist, wobei der Rührquirl (100) in dem von dem Deckel (220) verschlossenen Topf (210) angeordnet ist, wobei ein Boden des Topfes (210) ein erstes Ende der Rührkammer (200) bildet, wobei der Deckel (220) an einem zweiten Ende der Rührkammer (200) platziert ist,
und dadurch, dass
- die Rührkammer (200) so konzipiert ist, dass sie in einer ersten Position in einer Aufnahme (350) der Zubereitungseinrichtung (500) mit der Öffnung (211) an der Oberseite der Rührkammer (200) derart platziert wird, dass die Zutaten von der Seite des zweiten Endes durch Schwerkraft in die Rührkammer (200) fallen, und dass, wenn sich der Rührquirl (100) in der ersten Drehrichtung dreht, die Zutaten vom ersten Abschnitt (110a, 120a) in Richtung des ersten Endes der Rührkammer (200) geschoben oder bewegt werden,
- wobei die Einrichtung (500) einen Getriebemotor (340) und ein Ritzel (341) umfasst, das mit einem gezahnten Abschnitt des Topfes (210) in Eingriff geht, um die Rührkammer (200) in der Aufnahme (350) zu schwenken, um die Öffnung (211) zur Unterseite der Rührkammer (200) zu bringen, sodass, wenn der Rührquirl (100) in der zweiten Drehrichtung gedreht wird, die Zutaten vom ersten Abschnitt (110a; 120a) in Richtung des zweiten Endes der Rührkammer, das heißt in Richtung des zweiten Abschnitts (110b; 120b), der sich der Öffnung (211) gegenüberliegend befindet, transportiert werden.

2. Zubereitungseinrichtung (500) nach dem vorstehenden Anspruch, wobei der zweite Abschnitt (110b, 120b) des Rührquirls (100) einen biegsamen Teil umfasst.

3. Zubereitungseinrichtung (500) nach dem vorstehenden Anspruch, wobei der biegsame Teil des Rührquirls (100) aus Silikon ist.

4. Zubereitungseinrichtung (500) nach einem der vorstehenden Ansprüche, wobei der erste Abschnitt (110a, 120a) des Rührquirls (100) einen länglichen Querschnitt aufweist, dessen Länge normal zur Bewegungsrichtung des ersten Abschnitts (110a, 120a) verläuft.

5. Zubereitungseinrichtung (500) nach einem der vorstehenden Ansprüche, wobei der zweite Abschnitt (110b, 120b) des Rührquirls (100) parallel zu einer die Drehachse (150) enthaltenden Ebene verläuft.

6. Zubereitungseinrichtung (500) nach einem der vorstehenden Ansprüche, wobei der Rührquirl (100) zwei exzentrische Arme (110, 120) umfasst.

7. Zubereitungseinrichtung (500) nach dem vorstehenden Anspruch, wobei der Rührquirl (100) mindestens einen radialen Ansatz (141) umfasst, der die zwei exzentrischen Arme (110, 120) miteinander verbindet.

8. Zubereitungseinrichtung (500) nach einem der vorstehenden Ansprüche, wobei der Rührquirl (100) zwei Verankerungen an der Rührkammer (200) und einen Längsansatz (151) umfasst, der die zwei Verankerungen miteinander verbindet.

9. Zubereitungseinrichtung (500) nach dem vorstehenden Anspruch, wobei der erste und der zweite Abschnitt (110b, 120b) des Rührquirls (100) zwischen den zwei Verankerungen angeordnet sind.

10. Zubereitungseinrichtung (500) nach einem der Ansprüche 8 oder 9, wobei eine der Verankerungen des Rührquirls (100) so angeordnet ist, dass sie mit einem Mitnehmer zusammenpasst, der mit einem Motor der Zubereitungseinrichtung (500) verbunden ist.

11. Zubereitungseinrichtung (500) nach einem der vorstehenden Ansprüche, wobei der erste Abschnitt (110a, 120a) des Rührquirls (100) eine Schraubenform aufweist.

12. Zubereitungseinrichtung (500) nach einem der vorstehenden Ansprüche, wobei der mindestens eine exzentrische Arm (110, 120) des Rührquirls (100) einen Querschnitt aufweist, dessen Länge kleiner oder gleich 12 mm und vorzugsweise kleiner oder gleich 10 mm ist.

13. Verfahren zur Zubereitung von Tierfutter mit einer Zubereitungseinrichtung (500) nach einem der Ansprüche 1 bis 12, umfassend die Schritte, die darin bestehen:
- Zutaten, die eine Portion eines Trockenfutters und eine Flüssigkeit umfassen, in eine Rührkammer (200) einzubringen;
- die in der Rührkammer (200) enthaltenen Zutaten entlang einer ersten axialen Richtung zu bewegen und sie mit einem Rührquirl (100), der sich um eine Drehachse (150) dreht, zu verrühren;
- die in der Rührkammer (200) enthaltenen Zutaten mit dem Rührquirl (100) entlang einer zweiten axialen Richtung, die der ersten axialen Richtung entgegengesetzt ist, zu bewegen;
- die in der Rührkammer (200) enthaltenen Zutaten mit dem Rührquirl (100) in einer radialen Richtung auszutreiben.

## Claims

1. Appliance (500) for preparing animal feed comprising a mixing paddle (100) and a mixing chamber (200) comprising an orifice (211), the mixing paddle (100) being arranged to be received in the mixing chamber (200) of the appliance (500) for preparing animal feed in order to mix ingredients in it, comprising a portion of a dehydrated feed with a liquid,
the mixing paddle (100) being arranged to rotate about a horizontal rotation axis (150), and comprising at least one eccentric arm (110, 120) with respect to the rotation axis (150), said at least one eccentric arm (110, 120) comprising:
- a first portion (110a, 120a) inclined with respect to a plane containing the rotation axis (150), in order to bring about a movement of the ingredients contained in the mixing chamber (200) along a first axial direction when the mixing paddle (100) rotates in a first direction of rotation,
- a second portion (110b, 120b) arranged upstream of the first portion (110a, 120a) with respect to the first axial direction, having a cross section oriented radially with respect to the rotation axis (150) in order, when the mixing paddle (100) rotates in a second direction of rotation, to bring about a radial movement of the ingredients contained in the mixing chamber (200) towards the outside of the mixing chamber (200), and which are thus returned to the second portion (110b, 120b) by the first portion (110a, 120a),
**characterised in that**
- the mixing chamber (200) comprises a pot (210) closed by a cover (220), said orifice (211) being formed in the pot (210) or implanted in the cover (220), the mixing paddle (100) being arranged in the pot (210) closed by the cover (220), a bottom of the pot (210) forming a first end of the mixing chamber (200), the cover (220) being placed at a second end of the mixing chamber (200),
and **in that**
- the mixing chamber (200) is designed to, in a first position, be placed in a housing (350) of the preparation appliance (500) with the orifice (211) at the top of the mixing chamber (200), such that the ingredients fall by gravity into the mixing chamber (200) on the side of the second end and that, when the mixing paddle (100) rotates in the first direction of rotation, the ingredients are pushed or moved by the first portion (110a, 120a) towards the first end of the mixing chamber (200),
- the appliance (500) comprising a geared motor (340) and a pinion (341) which engages with a toothed portion of the pot (210) to make the mixing chamber (200) pivot in the housing (350) to bring the orifice (211) to the bottom of the mixing chamber (200), such that by making the mixing paddle (100) rotate in the second direction of rotation, the ingredients are returned by the first portion (110a; 120a) towards the second end of the mixing chamber, i.e. towards the second portion (110b; 120b) located facing the orifice (211).

2. Preparation appliance (500) according to the preceding claim, wherein the second portion (110b, 120b) of the mixing paddle (100) comprises a flexible part.

3. Preparation appliance (500) according to the preceding claim, wherein the flexible part of the mixing paddle (100) is made of silicone.

4. Preparation appliance (500) according to one of the preceding claims, wherein the first portion (110a, 120a) of the mixing paddle (100) has an extended cross section, the length of which is normal to the movement direction of the first portion (110a, 120a).

5. Preparation appliance (500) according to one of the preceding claims, wherein the second portion (110b, 120b) of the mixing paddle (100) is parallel to a plane containing the rotation axis (150).

6. Preparation appliance (500) according to one of the preceding claims, wherein the mixing paddle (100) comprises two eccentric arms (110, 120).

7. Preparation appliance (500) according to the preceding claim, wherein the mixing paddle (100) comprises at least one radial tab (141) joining the two eccentric arms (110, 120).

8. Preparation appliance (500) according to one of the preceding claims, wherein the mixing paddle (100) comprises two anchorings on the mixing chamber (200) and a longitudinal tab (151) joining the two anchorings.

9. Preparation appliance (500) according to the preceding claim, wherein the first and the second portions (110b, 120b) of the mixing paddle (100) are arranged between the two anchorings.

10. Preparation appliance (500) according to one of claims 8 or 9, wherein one of the anchorings of the mixing paddle (100) is arranged to be coupled with a driver connected to a motor of the preparation appliance (500).

11. Preparation appliance (500) according to one of the preceding claims, wherein the first portion (110a, 120a) of the mixing paddle (100) has a helical shape.

12. Preparation appliance (500) according to one of the preceding claims, wherein said at least one eccentric arm (110, 120) of the mixing paddle (100) has a cross section, the length of which is less than or equal to 12mm, and preferably less than or equal to 10mm.

13. Method for preparing animal feed from a preparation appliance (500) according to one of claims 1 to 12 comprising the steps consisting of:
- introducing ingredients comprising a portion of a dehydrated feed and a liquid into a mixing chamber (200);
- moving the ingredients contained in the mixing chamber (200) along a first axial direction and mixing them with a mixing paddle (100) rotating about a rotation axis (150);
- moving the ingredients contained in the mixing chamber (200) along a second axial direction opposite the first axial direction with the mixing paddle (100);
- expelling the ingredients contained in the mixing chamber (200) in a radial direction, with the mixing paddle (100).
